# EUROPÄISCHE PATENTSCHRIFT

(11) **EP 1 295 523 B1**
(45) Veröffentlichungstag und Bekanntmachung des Hinweises auf die Patenterteilung: **16.02.2005**
(21) Anmeldenummer: 02019972.5
(22) Anmeldetag: 05.09.2002
(51) Int. Cl.: A01D 63/04

(54) **Halmteiler**
Crop divider
Diviseur d'épis

(30) Priorität: 22.09.2001 DE 10146768
(43) Veröffentlichungstag der Anmeldung: 26.03.2003
(73) Patentinhaber: DEERE & COMPANY, Moline, Illinois 61265-8098 (US)
(72) Erfinder: Weichholdt, Dirk, 57200 Sarreguemines (FR)
(74) Vertreter: Holst, Sönke, Dr.

(56) Entgegenhaltungen:
- EP-A- 0 539 745
- DD-A- 128 878
- DE-A- 1 926 441
- DE-A- 2 058 255

## Beschreibung

Die Erfindung betrifft einen Halmteiler für eine Erntegutbergungsvorrichtung, mit einem Abweiser, der mittels eines Gelenks um eine Schwenkachse zwischen einer Betriebsstellung und einer Transportstellung verschwenkbar und in der Betriebsstellung und der Transportstellung arretierbar ist.

Ein um eine vertikale Schwenkachse zwischen einer Betriebs- und einer Transportstellung schwenkbarer Halmteiler ist in der DE 24 54 479 A offenbart. Der Halmteiler wird in diesen zwei Stellungen mittels eines einzigen federbelasteten Riegels festgesetzt, der sich oberhalb der Schwenkachse befindet.

In der EP 0 539 735 A ist ein Halmteiler für einen Mähdrescher wiedergegeben, der um ein Gelenk mit vertikal verlaufender Schwenkachse zwischen einer Betriebs- und einer Transportstellung verschwenkbar angebracht ist. Zur Arretierung dient ein Steckbolzen, der sich durch Löcher im schwenkbaren und im festen Teil des Halmteilers erstreckt.

Die EP 1 036 495 A schlägt einen Halmteiler vor, der über ein Gelenk mit schräg nach vorn und innen verlaufender Schwenkachse zwischen einer Betriebs- und einer Transportstellung verschwenkbar ist. Hier wird zur Arretierung ein Splint verwendet, der durch entsprechende Löcher im Gehäuse des Gelenks gesteckt wird. Die Position der Löcher wird nicht näher beschrieben.

DD 128 878 veröffentlicht einen Halmteiler, der mit einem ersten Sperrelement in der Betriebstellung und mit einem zweiten Sperrelement in der Transportstellung arretierbar ist.

Bei den bekannten, zwischen Betriebs- und Transportstellung verschwenkbaren Halmteilern ist die Dimensionierung der Arretierung des Gelenks als problematisch anzusehen. Wird die Sperreinrichtung zu nahe an die Schwenkachse gelegt, weist die Halmteilerspitze ein großes Spiel auf, was beim Erntevorgang zu ungleichmäßigen Erntegutkanten führen kann. Wird sie jedoch weiter von der Schwenkachse fort gelegt, sind seitlich abstehende Elemente erforderlich, die für die Arretierung in der Transportstellung benötigt werden. An diesen seitlich überstehenden Elementen können sich Getreidehalme verfangen, was zu Verstopfungen führen kann. Wenn diese Verstopfungen auftreten, kommt es zum so genannten Schieben des Schneidwerks, was bedeutet, dass der Halmteiler nicht mehr seine Funktion erfüllt, sondern nur noch die Halme nach unten und/oder vorn drückt, so dass Verluste entstehen.

Das der Erfindung zu Grunde liegende Problem wird darin gesehen, einen verbesserten schwenkbaren Halmteiler zu schaffen, der im Betrieb wenig Spiel an der Halmteilerspitze aufweist, an dem sich aber auch möglichst wenig Getreidehalme verfangen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, das Gelenk mit zwei Sperrelementen auszustatten. Ein erstes Sperrelement ist eingerichtet, das Gelenk - und damit den Abweiser - in der Betriebsstellung zu arretieren. Ein zweites Sperrelement ist eingerichtet, das Gelenk in der Transportstellung zu arretieren. Das erste Sperrelement ist weiter von der Schwenkachse beabstandet als das zweite Sperrelement.

Auf diese Weise erreicht man, dass der Abweiser in der Betriebsstellung nur wenig Spiel aufweist, da das dann wirksame, erste Sperrelement relativ weit von der Schwenkachse entfernt ist. Das zweite Sperrelement ist in der Transportstellung wirksam, in der es sich nicht störend bemerkbar macht, falls die Halmteilerspitze wegen des geringeren Abstands zwischen Schwenkachse und zweitem Sperrelement mehr Spiel aufweist. Der geringere Abstand zwischen der Schwenkachse und dem zweitem Sperrelement ermöglicht aber, die seitlichen Abmessungen des Gelenks kompakt zu halten, so dass sich kaum Halme am Gelenk verfangen können. Anzumerken ist, dass es beliebig ist, ob die Sperrelemente mit dem Abweiser verschwenkt werden oder ortsfest bleiben. Die entsprechenden Rastelemente, mit den die Sperrelemente zum Arretieren zusammenwirken, sind dann entweder ortsfest oder werden mit dem Abweiser verschwenkt.

Vorzugsweise befinden sich das erste und das zweite Sperrelement auf einer Geraden, die sich durch die Schwenkachse und in der Betriebsstellung des Halmteilers in der Vorwärtsbewegungsrichtung erstreckt. In der Betriebsstellung sind somit beide Sperrelemente vor oder hinter der Schwenkachse angeordnet, während sie sich (bei verschwenkbaren Sperrelementen) in der Transportstellung seitlich von ihr befinden. Die in der Transportstellung mit dem zweiten Sperrelement zusammenwirkenden Rastelemente brauchen somit nur relativ geringen seitlichen Abstand von der Schwenkachse aufzuweisen, so dass ein Verfangen von Getreidehalmen nicht zu befürchten ist. Außerdem wird es durch die Anordnung beider Sperrelemente auf einer Geraden möglich, sie mechanisch zu koppeln, so dass sie gemeinsam manuell betätigbar werden.

Als vorteilhaft erweist es sich, wenn eine Feder das erste und/oder zweite Sperrelement in eine Rastposition verbringt. Die Feder, die vorzugsweise mit beiden Sperrelementen gekoppelt ist, drückt das (mit dem Abweiser schwenkbare oder ortsfeste) Sperrelement in ein entsprechendes (festes oder mit dem Abweiser schwenkbares) Rastelement hinein. Zum Lösen der Arretierung kann das Sperrelement manuell oder durch beliebige andere Mittel gegen die Kraft der Feder vom Rastelement gelöst werden, so dass der Abweiser frei verschwenkbar wird.

In einer bevorzugten Ausführungsform ist die Feder innerhalb eines den Abweiser halternden Rohres angeordnet. Auch das erste und/oder das zweite Sperrelement können innerhalb des Rohrs angeordnet sein. Sie sind dort zwischen einer Raststellung und einer Lösestellung beweglich, beispielsweise verschiebbar. Man erreicht so einen kompakten Aufbau, an dem sich kaum Getreidehalme verfangen können. Das die Feder und die Sperrelemente enthaltende Rohr kann ortsfest oder mit dem Abweiser verschwenkbar sein. Anzumerken ist, dass eine derartige Konfiguration einer Feder und eines Sperrelements in einem Rohr auch verwendbar wäre, wenn der Abweiser in Betriebsund Transportposition wie im beschriebenen Stand der Technik durch ein und dasselbe Sperrelement arretiert würde.

Wie bereits angemerkt, wirken die Sperrelement mit ihnen zugeordneten Rastelementen zusammen, wobei entweder die Sperrelemente oder die Rastelemente ortsfest und die jeweils anderen Elemente mit dem Abweiser verschwenkbar sind. Als Rastelement kommt beispielsweise eine Einbuchtung in einem beliebig, z. B. plattenförmig, geformten Element in Frage.

Wegen des unterschiedlichen Abstands zwischen der Schwenkachse einerseits und dem ersten bzw. zweiten Sperrelement andererseits haben in der Regel auch die Rastelemente unterschiedliche Abstände von der Schwenkachse. Um Kollisionen zu vermeiden, bietet es sich an, ein Rastelement unterhalb der Schwenklagerung und ein Rastelement oberhalb der Schwenklagerung anzubringen. Dabei können sich die Rastelemente insbesondere in einer Halterung befinden, die einen Träger U-förmig umschließt. Der Träger ist in der Regel ein Rohr und entweder mit dem Abweiser gekoppelt oder ortsfest.

Der erfindungsgemäße Halmteiler kann an allen Arten von Erntegutbergungsvorrichtungen verwendet werden, wie Mähvorsätzen, Maisgebissen oder Pflückern. Der Erntebergungsvorsatz kann insbesondere an Erntemaschinen, wie Mähdreschern und Feldhäckslern verwendet werden. Das Gelenk kann auch als separates Element geliefert und an separate oder bereits vorhandene Halmteiler montiert werden.

In den Zeichnungen ist ein nachfolgend näher beschriebenes Ausführungsbeispiel der Erfindung dargestellt. Es zeigt:
- Fig. 1: eine Seitenansicht einer Erntegutbergungsvorrichtung für einen Mähdrescher mit einem Halmteiler in Betriebsposition,
- Fig. 2: einen vertikalen Schnitt durch das Gelenk des Halmteilers in der Betriebsposition,
- Fig. 3: eine perspektivische Ansicht des Gelenks in der Betriebsposition, und
- Fig. 4: eine perspektivische Ansicht des Gelenks in der Transportposition.

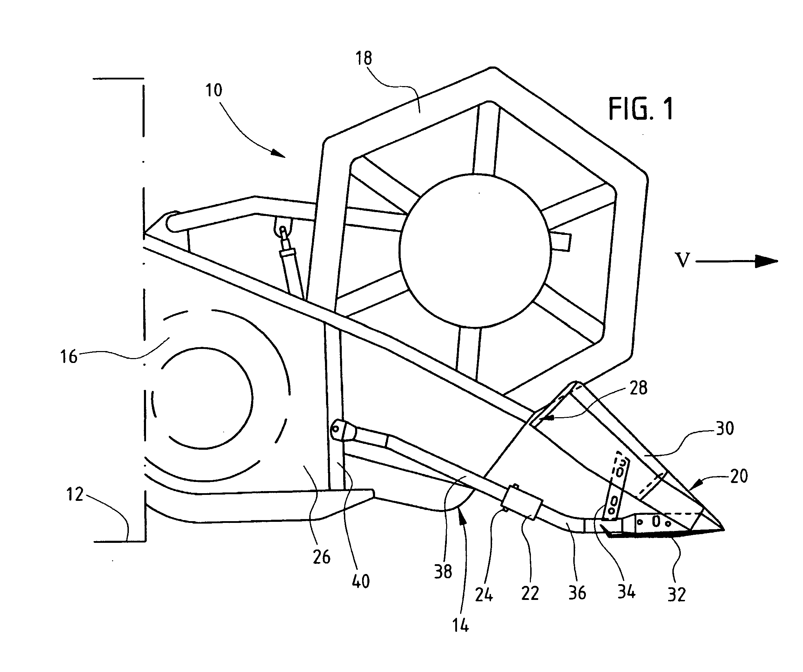

In Figur 1 ist eine Erntegutbergungsvorrichtung 10 in Form eines Schneidwerks für einen nicht dargestellten Mähdrescher wiedergegeben, die an der Frontseite des schematisch dargestellten Schrägförderers 12 anbringbar ist. Die Erntegutbergungsvorrichtung 10 weist in an sich bekannter Weise eine querliegendes Schneideinrichtung 14 auf, das aus einem Mähtisch und einem Mähbalken gebildet ist. Der Schneideinrichtung 14 ist ein Einzugsförderer 16, in der dargestellten Ausführungsform eine Schnecke, zugeordnet und eine Haspel 18 mit Zinken vorgelagert. Weiterhin ist der Erntegutbergungsvorrichtung 10 ein seitlicher Halmteiler 20 vorgelagert, der in seiner Betriebsposition in Vorwärtsbewegungsrichtung V des Mähdreschers zeigt und nach vorn von der Erntegutbergungsvorrichtung 10 absteht. In der Regel sind zwei symmetrische Halmteiler 20 an beiden Seiten der Erntegutbergungsvorrichtung 10 angeordnet. An beiden Seiten der Erntegutbergungsvorrichtung 10 sind außerdem Seitenwände 26 vorgesehen, die etwa dreiecksförmig ausgebildete Frontbereiche mit Spitzen 28 aufweisen. Anzumerken ist, dass sich im Folgenden Richtungsangaben, wie vor, hinter, über, unter, seitlich, etc. auf die Vorwärtsbewegungsrichtung V beziehen.

Der Halmteiler 20 setzt sich aus einem Abweiser 30, einem Bodenblech 32, einer Stütze 34 und einem ersten Rohr 36 zusammen, das über ein Gelenk 22 an einem zweiten Rohr 38 befestigt ist, das seinerseits an einer Strebe 40 angebracht ist, die an der Seitenwand 26 der Erntegutbergungsvorrichtung 10 befestigt ist. Der schalenförmige, mit einem Querschnitt in der Form eines umgedrehten, auf dem Kopf stehenden U versehene Abweiser 30 wird durch die Stütze 34 in seiner schräg nach oben und entgegen der Vorwärtsbewegungsrichtung V weisenden Position gegenüber dem ersten Rohr 36 fixiert. Die Stütze 34 ist am ersten Rohr 36 angeschweißt. Auch das (zum Gleiten auf dem Erdboden eingerichtete) Bodenblech 32 ist an der flachgepreßten Vorderseite des ersten Rohrs 36 angebracht. Der Halmteiler 20 dient zur Abtrennung einer Bahn geernteten Gutes von der benachbarten, noch nicht geernteten Bahn. Daher ist das Abweiser 20 in seinem in Vorwärtsbewegungsrichtung V vorderen Bereich spitz geformt.

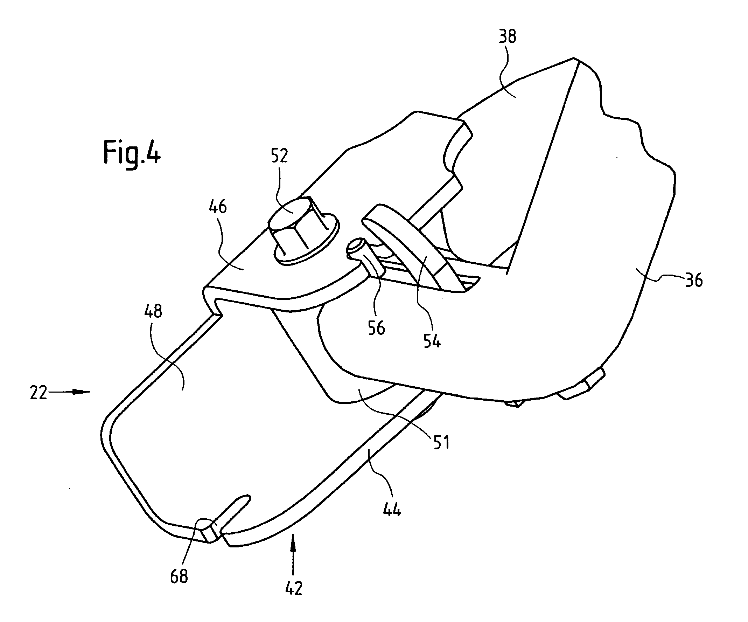

Der Halmteiler 20 bzw. das ihn halternde erste Rohr 36 ist in den Figuren 1 bis 3 in der Betriebsposition wiedergegeben und in Figur 4 in einer Transportstellung, in der der Abweiser 30 um ein Gelenk 22 mit einer Schwenkachse 24 um etwa 90° in Richtung auf die Mitte der Erntegutbergungsvorrichtung 10 zu nach innen eingeschwenkt ist. Die Schwenkachse 24 des Gelenks 22 verläuft nicht genau vertikal, sondern, wie in Figur 1 erkennbar, gegenüber der Vertikalen in Vorwärtsbewegungsrichtung V nach vorn (bezüglich der Zeichnungen im Gegenuhrzeigersinn) geneigt. In seitlicher Richtung betrachtet ist die Schwenkachse 24 nicht geneigt.

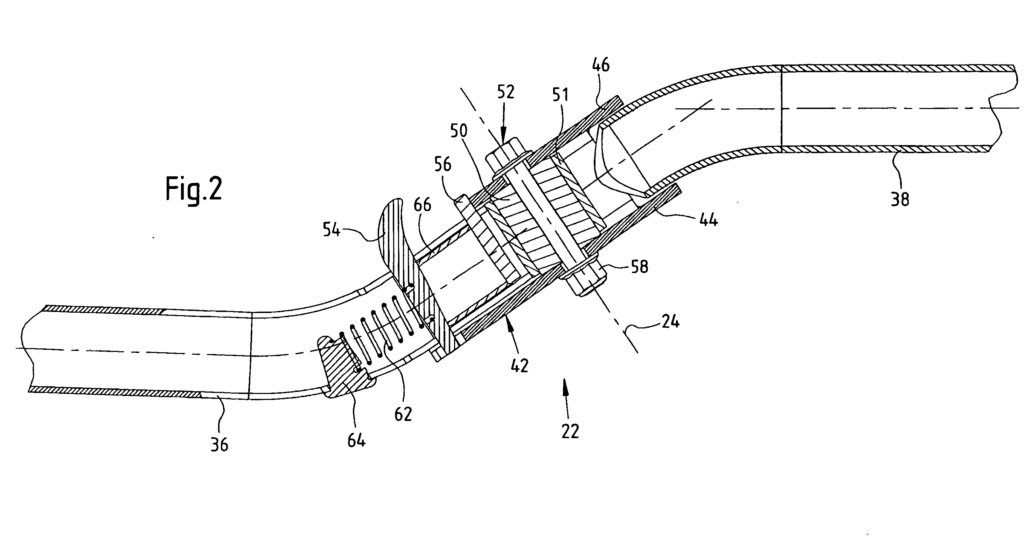

Das erfindungsgemäße Gelenk 22 ist in der Figur 2 wiedergegebenen Schnittansicht detaillierter dargestellt. Das Gelenk 22 umfasst eine U-förmige Halterung 42, an der das zweite Rohr 38 befestigt ist, beispielsweise angeschweißt. Die Halterung 42 weist zwei etwa horizontal angeordnete Schenkel 44, 46 auf, von denen sich der erste Schenkel 44 unterhalb des zweiten Rohrs 38 und der zweite Schenkel 46 oberhalb des zweiten Rohrs 38 befinden. Von den Schenkeln 44, 46 und der sie verbindenden Rückwand 48 (s. Figur 4) ist der in Vorwärtsbewegungsrichtung V vordere Endbereich des zweiten Rohrs 38 eingeschlossen.

Das erste Rohr 36 ist über eine Hülse 51 mit einem in der Hülse 51 angeordneten zylindrischen Zapfen 50 verbunden, der sich ebenfalls zwischen dem ersten Schenkel 44 und dem zweiten Schenkel 46 befindet. Der Zapfen 50 weist eine mittige Bohrung auf, durch den sich ein Schwenkstift 52 erstreckt. Die Längsachse des Schwenkstifts 52, die Längsachse der Bohrung im Zapfen 50 und die Schwenkachse 24 stimmen überein. Der Zapfen 50 mit dem daran befestigten ersten Rohr 36 ist somit um die Schwenkachse 24 schwenkbar. Der Schwenkstift 52 weist an seiner Oberseite einen überstehenden Kopf auf und ist an seiner Unterseite durch eine Mutter 58, die mit einem entsprechenden Gewinde des Schwenkstifts 52 zusammenwirkt, gegen Verschieben und Herausfallen gesichert.

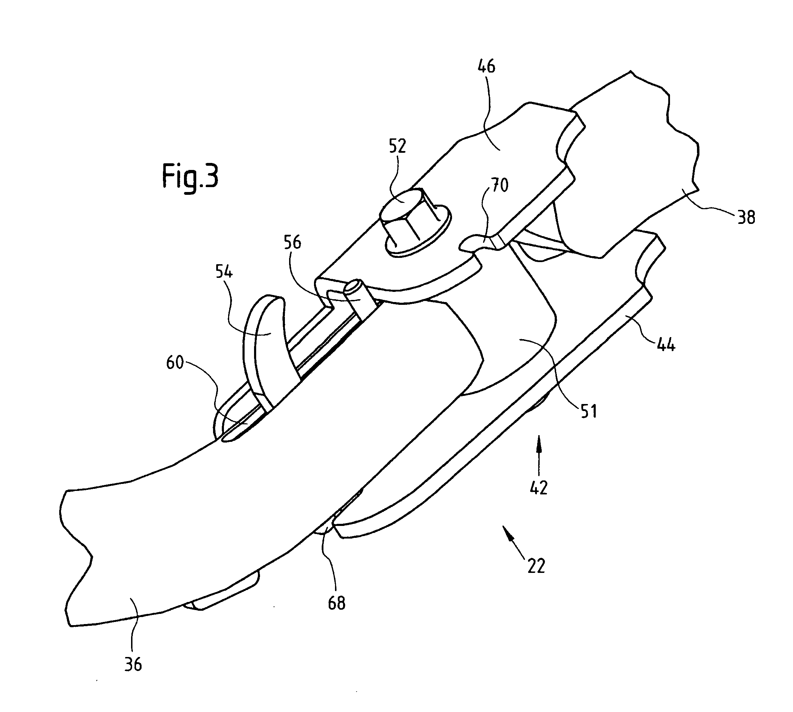

Das Gelenk 22 ist in der Betriebsposition und der Transportposition des Halmteilers 20 arretierbar. Dazu ist ein erstes, an seiner Oberseite als hakenförmiges Griffelement ausgeformtes Sperrelement 54 und ein zweites, stiftförmiges Sperrelement 56 vorgesehen. Das erste und das zweite Sperrelement 54, 56 sind im Innern des in Vorwärtsbewegungsrichtung V hinteren Bereich des ersten Rohrs 36 angeordnet und untereinander mechanisch durch eine sich koaxial zum Endbereich des ersten Rohrs 36 erstreckende Hülse 66 verbunden. Das zweite Sperrelement 56 liegt näher am Schwenkstift 52 als das erste Sperrelement 54. Das erste Sperrelement 54, die Hülse 66 und das zweite Sperrelement 56 sind im Endbereich des ersten Rohrs 36 in dessen Längsrichtung verschiebbar gelagert. Die Sperrelemente 54, 56 erstrecken sich radial zum Endbereich des ersten Rohrs 36 und näherungsweise vertikal. Die oberen Enden der Sperrelemente 54, 56 erstrecken sich durch einen Schlitz 60 (s. Figuren 3 und 4) an der Oberseite des ersten Rohrs 36. Auch die Unterseite des ersten Sperrelements 54 erstreckt sich durch einen entsprechenden Schlitz an der Unterseite des ersten Rohrs 36.

Das erste und das zweite Sperrelement 54, 56 werden mit der Kraft einer spiralförmigen Feder 62 beaufschlagt, die sich einen Endes am ersten Sperrelement 54 und anderen Endes an einem Gegenhalter 64 abstützt, der am ersten Rohr 36 befestigt ist. Ohne Einwirkung externer Kräfte drückt die Feder 62 das erste Sperrelement 54 in Figur 2 nach rechts, welches über die Hülse 66 auch das zweite Sperrelement 56 nach rechts drückt. Somit befindet sich die Unterseite des ersten Sperrelements 54 im Eingriff mit einem U-förmigen ersten Einschnitt 68, der in den ersten Schenkel 44 der Halterung 42 eingebracht ist, s. Figuren 3 und 4, wenn sich der Abweiser 30 in der Betriebsposition befindet. Die Breite des ersten Einschnitts 68 ist nur geringfügig größer als die des ersten Sperrelements 54. Die Feder 62 bewirkt somit eine Arretierung des Halmteilers 20.

Das über die Oberseite des Endbereichs des ersten Rohrs 36 überstehende obere Ende des ersten Sperrelements 54 bildet eine Grifffläche, die es ermöglicht, das Sperrelement 54 manuell gegen die Kraft der Feder 62 aus dem ersten Einschnitt 68 im ersten Schenkel 44 der Halterung 44 herauszuziehen, um den Halmteiler 20 in seine Transportposition zu verschwenken. Nachdem das erste Sperrelement 54 aus dem ersten Einschnitt 68 herausgezogen wurde und der Abweiser 30 um einen bestimmten Winkel (einige Grad) nach innen - in Figur 3 nach rechts - verschwenkt ist, kann die Bedienungsperson das Sperrelement 54 loslassen. Das erste Sperrelement 54 gleitet beim Schwenken des Abweisers 30 an der Kante des ersten Schenkels 44 der Halterung 42 entlang, bis das obere Ende des zweiten Sperrelements 56 an der Kante des zweiten Schenkels 46 der Halterung 42 in Anlage kommt. Die Kanten der Schenkel 44, 46 bilden eine Art Kurvensteuerung für die Sperrelemente 54, 56. Ist der Halmteiler 20 bis in seine Transportposition verschwenkt, gelangt das obere Ende des zweiten Sperrelements 56 durch Wirkung der Feder 62 in einen U-förmigen zweiten Einschnitt 70 im zweiten Schenkel 46 der Halterung 42. Da die Breite des zweiten Einschnitts nur geringfügig größer als der Durchmesser des zweiten Sperrelements ist, wird das zweite Sperrelement 56 durch die Kraft der Feder 62 dort arretiert. Es wäre auch denkbar, dass das erste Sperrelement 54 über den gesamten Schwenkweg des Halmteilers 20 festgehalten und erst beim Erreichen der Betriebs- bzw. Transportposition losgelassen wird.

Das Schwenken von der Transportposition in die Betriebsposition geschieht in umgekehrter Weise, wobei zunächst das zweite Sperrelement 56 außer Eingriff mit dem zweiten Einschnitt 70 gebracht wird, indem die Bedienungsperson das oberen Ende des ersten Sperrelements 54 von der Schwenkachse 24 fort zieht.

In der Betriebsposition wird der Halmteiler 20 durch das erste Sperrelement 54 arretiert, das relativ weit von der Schwenkachse 24 beabstandet ist. Durch den großen Abstand ist das Spiel an der Halmteilerspitze recht gering. In der Transportposition wird der Halmteiler 20 durch das zweite Sperrelement 56 arretiert, das näher an der Schwenkachse 24 liegt. Man erhält zwar ein größeres Spiel des Halmteilers 20, das sich beim Transport aber nicht störend bemerkbar macht. Andererseits ermöglicht die Verwendung des zweiten Sperrelements 56, die Halterung 42 recht schmal zu gestalten, so dass sich nur wenig Halme am Gelenk 22 verfangen können. Auch durch die Anordnung der Feder 62 und wesentlicher Teile der Sperrelemente 54, 56 im Innern des ersten Rohrs 36 wird ein relativ kompakter Aufbau des Gelenks 22 erzielt.

Insbesondere anhand der Figur 4 wird erkennbar, dass es auch denkbar wäre, das erste Rohr 36 fest mit der Halterung 42 und das zweite Rohr 38 mit dem Zapfen 50 zu verbinden.

## Patentansprüche

1. Halmteiler (20) für eine Erntegutbergungsvorrichtung (10), mit einem Abweiser (30), der mittels eines Gelenks (22) um eine Schwenkachse (24) zwischen einer Betriebsstellung und einer Transportstellung verschwenkbar und in der Betriebsstellung und der Transportstellung arretierbar ist, **dadurch gekennzeichnet, dass** das Gelenk (22) ein erstes Sperrelement (54), mit dem das Gelenk (22) in der Betriebsstellung arretierbar ist und ein zweites Sperrelement (56) aufweist, mit dem das Gelenk (22) in der Transportstellung arretierbar ist und dass das erste Sperrelement (54) weiter von der Schwenkachse (24) beabstandet ist als das zweite Sperrelement (56).

2. Halmteiler (20) nach Anspruch 1, **dadurch gekennzeichnet, dass** das erste Sperrelement (54) und das zweite Sperrelement (56) auf einer Geraden angeordnet sind, die sich durch die Schwenkachse (24) und in der Betriebsstellung des Abweisers (30) in der Vorwärtsbewegungsrichtung erstreckt.

3. Halmteiler (20) nach Anspruch 1 oder 2, **dadurch gekennzeichnet, dass** das erste Sperrelement (54) und/oder das zweite Sperrelement (56) durch eine Feder (62) in eine Rastposition gedrückt wird.

4. Halmteiler (48) nach Anspruch 3, **dadurch gekennzeichnet, dass** sich die Feder (62) innerhalb eines den Abweiser (30) halternden Rohrs (36) befindet.

5. Halmteiler (48) nach einem der vorhergehenden Ansprüche, **dadurch gekennzeichnet, dass** das erste Sperrelement (54) und/oder das zweite Sperrelement (56) in der Längsrichtung eines den Abweiser (30) halternden Trägers, insbesondere Rohrs (36), verschiebbar angeordnet ist.

6. Halmteiler (48) nach einem der Ansprüche 1 bis 5, **dadurch gekennzeichnet, dass** das erste Sperrelement (54) und/oder das zweite Sperrelement (56) im Inneren eines den Abweiser (30) halternden Trägers, insbesondere Rohrs (36), angeordnet ist.

7. Halmteiler (48) nach einem der vorhergehenden Ansprüche, **dadurch gekennzeichnet, dass** das erste Sperrelement (54) und/oder das zweite Sperrelement (56) in ihrer Arretierstellung mit jeweils einer als Rastelement wirkenden Einbuchtung (68, 70) zusammenwirken.

8. Halmteiler (48) nach einem der vorhergehenden Ansprüche, **dadurch gekennzeichnet, dass** sich ein mit einem Sperrelement (54, 56) zusammenwirkendes Rastelement unterhalb der Schwenklagerung und ein anderes, mit einem Sperrelement (54, 56) zusammenwirkendes Rastelement oberhalb der Schwenklagerung befindet.

9. Halmteiler (48) nach Anspruch 8, **dadurch gekennzeichnet, dass** eine mit den Rastelementen versehene Halterung (42) einen mit dem Abweiser (30) verbundenen oder ortsfesten Träger U-förmig umschließt.

10. Halmteiler (48) nach einem der vorhergehenden Ansprüche, **dadurch gekennzeichnet, daß** er an einem Mähvorsatz oder einem Maispflücker oder einem Mähhäcksler befestigt ist.

## Claims

1. Divider (20) for a crop collecting device (10), with a deflector (30), which can be pivoted around a swivel axis (24) between an operating position and a transport position by means of an articulation (22) and can be locked in the operating position and the transport position, **characterised in that** the articulation (22) has a first locking element (54), with which the articulation (22) can be locked in the operating position, and a second locking element (56), with which the articulation (22) can be locked in the transport position, and that the first locking element (54) is located further away from the swivel axis (24) than the second locking element (56).

2. Divider (20) according to Claim 1, **characterised in that** the first locking element (54) and the second locking element (56) are arranged on a straight line, which extends through the swivel axis (24) and in the operating position of the deflector (30) in the direction of forward movement.

3. Divider (20) according to Claim 1 or 2, **characterised in that** the first locking element (54) and/or the second locking element (56) is/are pressed into a latch position by a spring (62).

4. Divider (48) according to Claim 3, **characterised in that** the spring (62) is located inside a tube (36) holding the deflector (30).

5. Divider (48) according to one of the preceding claims, **characterised in that** the first locking element (54) and/or the second locking element (56) is/are arranged to be displaceable in the longitudinal direction of a support, in particular a tube (36), holding the deflector (30).

6. Divider (48) according to one of Claims 1 to 5, **characterised in that** the first locking element (54) and/or the second locking element (56) is/are arranged inside a support, in particular a tube (36), holding the deflector (30).

7. Divider (48) according to one of the preceding claims, **characterised in that** the first locking element (54) and/or the second locking element (56) interact in their locking position with a respective recess (68, 70) acting as latch element.

8. Divider (48) according to one of the preceding claims, **characterised in that** one latch element interacting with a locking element (54, 56) is located below the swivel bearing and another latch element interacting with a locking element (54, 56) is located above the swivel bearing.

9. Divider (48) according to Claim 8, **characterised in that** a holding means (42) provided with the latch elements encloses a support, which is fixed or connected to the deflector (30), in a U shape.

10. Divider (48) according to one of the preceding claims, **characterised in that** it is fastened to a mowing attachment or a maize picker or a crop chopper.

## Revendications

1. Diviseur d'épis (20) pour dispositif de ramassage de récolte (10), du type comportant un déflecteur (30), qui, au moyen d'une pièce de jonction articulée (22), peut pivoter autour d'un axe de basculement (24), entre une position de service et une position de transport, et qui peut être immobilisée dans la position de service et dans la position de transport, **caractérisé en ce que** la pièce de jonction (22) comporte un premier élément de verrouillage (54), avec lequel la pièce de jonction (22) peut être immobilisée dans la position de service, et un second élément de verrouillage (56), avec lequel la pièce de jonction (22) peut être immobilisée dans la position de transport, et **en ce que** le premier élément de verrouillage (54) est plus éloigné de l'axe de basculement (24) que le second élément de verrouillage (56).

2. Diviseur d'épis (20) selon la revendication 1, **caractérisé en ce que** le premier élément de verrouillage (54) et le second élément de verrouillage (56) sont disposés suivant une ligne droite qui s'étend en passant par l'axe de basculement (24) et dans la position de service du déflecteur (30) dans la direction d'avancement.

3. Diviseur d'épis (20) selon l'une ou l'autre des revendications 1 ou 2, **caractérisé en ce que** le premier élément de verrouillage (54) et/ou le second élément de verrouillage (56) sont comprimés dans une position de repos par un ressort (62).

4. Diviseur d'épis (48) selon la revendication 3, **caractérisé en ce que** le ressort (62) se trouve à l'intérieur d'un tube (36) de maintien du déflecteur (30).

5. Diviseur d'épis (48) selon l'une quelconque des revendications précédentes, **caractérisé en ce que** le premier élément de verrouillage (54) et/ou le second élément de verrouillage (56) sont montés déplaçables dans la direction longitudinale d'un support de maintien du déflecteur (30), et plus particulièrement du tube (36).

6. Diviseur d'épis (48) selon l'une quelconque des revendications 1 à 5, **caractérisé en ce que** le premier élément de verrouillage (54) et/ou le second élément de verrouillage (56) sont disposés à l'intérieur d'un support de maintien du déflecteur (30), et plus particulièrement du tube (36).

7. Diviseur d'épis (48) selon l'une quelconque des revendications précédentes, **caractérisé en ce que** le premier élément de verrouillage (54) et/ou le second élément de verrouillage (56) coopèrent chacun, dans leur position d'arrêt, avec un évidement (68, 70), agissant en tant qu'élément de repos.

8. Diviseur d'épis (48) selon l'une quelconque des revendications précédentes, **caractérisé en ce qu'**un élément de repos coopérant avec un élément de verrouillage (54, 56), se trouve au-dessous de la position de basculement et un autre élément de repos coopérant avec un élément de verrouillage (54, 56), se trouve au-dessus de la position de basculement.

9. Diviseur d'épis (48) selon la revendication 8, **caractérisé en ce qu'**un organe de maintien (42), prévu avec les éléments de repos, crée un entourage en forme de U réuni ou immobilisé avec le déflecteur (30).

10. Diviseur d'épis (48) selon l'une quelconque des revendications précédentes, **caractérisé en ce qu'**il est fixé à l'avant d'une moissonneuse, à un appareil de cueillette de maïs ou à un hacheur de moissonneuse.
